# EUROPEAN PATENT APPLICATION

(11) **EP 3 369 317 A1**
(43) Date of publication of application: **05.09.2018**
(21) Application number: 16859683.1
(22) Date of filing: 20.10.2016
(51) Int. Cl.: A01N 25/12, A01M 21/04, A01N 25/00, A01N 43/54, A01N 43/78, A01N 43/90, A01N 47/36, A01P 3/00, A01P 7/04, A01P 13/00, A01P 21/00

(54) **GRANULAR AGROCHEMICAL COMPOSITION**

(30) Priority: 30.10.2015 JP 2015215260
(71) Applicant: Kumiai Chemical Industry Co., Ltd., Taito-ku Tokyo 110-8782 (JP)
(72) Inventor: WATANABE Satoshi, Tokyo 110-8782 (JP); FUJIHIRA Yoshitaka, Tokyo 110-8782 (JP); YAMAJI Koji, Tokyo 110-8782 (JP); FUJITA Shigeki, Tokyo 110-8782 (JP)
(74) Representative: Boult Wade Tennant LLP
(86) International application number: PCT/JP2016/081117
(87) International publication number: WO 2017/073453

(57) **Abstract**

The present invention provides a granular agrochemical composition capable of reducing the risk of occurrence of chemical injury and capable of saving the labor, and a method for spraying the granular agrochemical composition. The granular agrochemical composition containing an agrochemical active component is used being mixed with rice seeds and sprayed upon sowing, and the composition having a short diameter of 50 to 320% of the width of the rice seeds, a long diameter of 50 to 230% of the length of the rice seeds, and a specific gravity of 1 to 4 g/cm³. The method and the like for spraying the granular agrochemical composition, including: a mixing step of mixing the granular agrochemical composition with rice seeds; and a spraying step of spraying the mixture obtained in the mixing step.

## Description

### TECHNICAL FIELD

The present invention relates to a granular agrochemical composition, more specifically, a granular agrochemical composition capable of reducing the risk of occurrence of chemical injury and saving the labor.

### BACKGROUND ART

Cultivation of rice requires control of diseases, insect pests, weeds and the like. Further, the growth of rice needs be regulated for, for example, raising healthy seedlings and suppressing the height of the rice for prevention of lodging after heading. Thus, usually, agrochemicals such as microbicides, insecticides, herbicides, and plant growth regulators are used.

The agrochemicals are used by a variety of methods. Examples of major methods employed for cultivation of rice include methods in which an agrochemical composition is suspended in water and sprayed using a sprayer, methods in which a powder of an agrochemical composition is blown to the rice body with air from a blower, methods in which a granular or liquid agrochemical composition is sprayed into paddy water of a paddy field where rice is cultivated, and methods in which rice seedlings are raised using a seedling tray, and then an agrochemical composition is sprayed on the seedlings or the nursery soil, followed by transplantation of the seedlings to a paddy field. Recent examples of the methods in which a granular agrochemical composition is sprayed into paddy water of a paddy field include methods using an agrochemical composition in the form of large granules whose disintegration occurs while allowing dispersion of an effective component in a large area on the water surface (see, for example, Patent Document 1), and methods in which, in raising of seedlings using a seedling tray, sowing of rice seeds is carried out at the same time as spraying of a granular agrochemical composition into the nursery soil in the vicinity of the rice seeds (see, for example, Patent Document 2).

Among these, in the methods in which an agrochemical composition is suspended in water and sprayed using a sprayer, a large amount of water needs to be provided for the spraying of the composition on the large area of the paddy field, and the work load is heavy since the composition needs to be sprayed on the entire paddy field while pulling a long hose connected to a chemical liquid tank outside the paddy field. Therefore, those methods have been hardly carried out in recent years. Instead, chemical liquid spraying by a manned helicopter or unmanned helicopter has been carried out. However, such spraying has been carried out only in limited areas since it requires expensive equipment and highly technical skills for its operation, and since there has been social criticism against scattering of the chemical liquid in the neighborhood.

The methods in which a powder of an agrochemical composition is blown to the rice body with air from a blower, and the methods in which a granular or liquid agrochemical composition is sprayed into paddy water of a paddy field where rice is cultivated, have been commonly employed for the purpose of saving the labor. However, the former methods have been avoided because of exposure of the spraying operator himself to the agrochemical and scattering of the agrochemical in the neighborhood, and the latter methods require the labor of appropriately controlling the paddy water of the paddy field upon the spraying. Moreover, since both kinds of methods require uniform spraying of the agrochemical composition over the entire area of the broad paddy field, further labor saving has been demanded. One possible solution for the labor saving is a method using an agrochemical composition in the form of large granules whose disintegration occurs while allowing dispersion of an effective component in a large area on the water surface. However, the labor of visiting paddy fields only for spraying of the agrochemical, and of walking around the paddy fields while spraying the agrochemical in the vicinities of the paddy fields, cannot be eliminated.

The methods in which rice seedlings are raised using a seedling tray, and then an agrochemical composition is sprayed on the seedlings or the nursery soil, followed by transplantation of the seedlings to a paddy field have become common because these methods do not require visiting of paddy fields only for spraying of the agrochemical. However, the operation of uniformly spraying the agrochemical composition on the seedling tray containing thickly grown seedlings is not very simple, and this operation imposes a heavy burden especially in the busy season of rice planting. Another technique developed to meet the demand for labor saving is a method in which a granular agrochemical composition is sprayed into the nursery soil in the vicinity of the rice seeds at the same time as sowing. However, in this technique, germination and growth of seedlings occur in the presence of the highly concentrated agrochemical active component in the vicinity of the rice seeds, posing a high risk of occurrence of chemical injury. Therefore, this method is applicable only to very limited types of agrochemical active components. Further, the methods in which an agrochemical composition is sprayed on a seedling tray cannot be used, of course, for direct sowing cultivation, in which rice seeds are directly sown in a paddy field.

Still another labor-saving method that has been developed for agrochemical treatment is a technique in which the surface of rice seeds is coated/attached with an agrochemical composition, and sowing and spraying of the agrochemical are carried out at once (see, for example, Patent Documents 3 and 4). However, the operation of attaching a predetermined amount of agrochemical composition to rice seeds is laborious, and, also in this method, the agrochemical active component is present at high concentration in the vicinity of the rice seeds. Thus, there is a high risk of occurrence of chemical injury, and this method is applicable only to very limited types of agrochemical active components.

### RELATED ART DOCUMENTS

### PATENT DOCUMENTS

[Patent Document 1] Japanese Unexamined Patent Application Publication No. 2000-302602
[Patent Document 2] Japanese Unexamined Patent Application Publication No. 2003-321310
[Patent Document 3] Japanese Unexamined Patent Application Publication No. H08-275620
[Patent Document 4] Japanese Unexamined Patent Application Publication No. H10-033014

### SUMMARY OF THE INVENTION

### PROBLEMS TO BE SOLVED BY THE INVENTION

The present invention was made under such circumstances for the purpose of providing a granular agrochemical composition capable of reducing the risk of occurrence of chemical injury and capable of saving the labor, and a method for spraying it.

### MEANS FOR SOLVING THE PROBLEMS

As a result of intensive study for achievement of the above objects, the present inventors discovered that, by mixing, with rice seeds, a granular agrochemical composition having a particular size similar to the size of the rice seeds and having a certain particular specific gravity, and spraying the mixture upon sowing, the risk of occurrence of chemical injury can be reduced independent of the type of the agrochemical active component, and the labor of the operation of spraying the agrochemical can be saved not only in raising of seedlings using a seedling tray, but also in direct sowing cultivation, thereby completing the present invention.

That is, the present invention is as follows.
(1) A granular agrochemical composition comprising an agrochemical active component, which composition is used being mixed with rice seeds and sprayed upon sowing, the composition having a short diameter of 50 to 320% of the width of the rice seeds, a long diameter of 50 to 230% of the length of the rice seeds, and a specific gravity of 1 to 4 g/cm³.
(2) The granular agrochemical composition according to (1), whose short diameter is 2 to 8 mm.
(3) The granular agrochemical composition according to (1) or (2), for direct sowing cultivation of paddy rice.
(4) The granular agrochemical composition according to (3), wherein the direct sowing cultivation is direct sowing cultivation under flooded conditions or direct sowing cultivation on dry rice field.
(5) The granular agrochemical composition according to any one of (1) to (4), comprising a component having a disease control action as the agrochemical active component.
(6) The granular agrochemical composition according to any one of (1) to (5), comprising a component having an insect pest control action as the agrochemical active component.
(7) The granular agrochemical composition according to any one of (1) to (6), comprising a component having a weed control action as the agrochemical active component.
(8) The granular agrochemical composition according to any one of (1) to (7), comprising a component having a growth-regulating action as the agrochemical active component.
(9) A method for spraying a granular agrochemical composition, the method comprising:
   a mixing step of mixing the granular agrochemical composition according to any one of (1) to (8) with rice seeds; and
   a spraying step of spraying the mixture obtained in the mixing step.
(10) The method for spraying a granular agrochemical composition according to (9), wherein the rice is paddy rice, and wherein rice seeds of the paddy rice are sown by spraying of the mixture in the spraying step.
(11) The method for spraying a granular agrochemical composition according to (9) or (10), wherein rice seeds of the paddy rice are directly sown by spraying of the mixture in the spraying step.
(12) The method for spraying a granular agrochemical composition according to any one of (9) to (11), wherein the mixture is sprayed by a power granule sprayer in the spraying step.
(13) The method for spraying a granular agrochemical composition according to any one of (9) to (11), wherein the mixture is sprayed by a riding paddy field management machine in the spraying step.
(14) The method for spraying a granular agrochemical composition according to any one of (9) to (11), wherein the mixture is sprayed by an aircraft, manned helicopter, or unmanned helicopter in the spraying step.
(15) The method for spraying a granular agrochemical composition according to any one of claims (9) to (14), wherein the mixing amount of the granular agrochemical composition in the mixture is 0.001 to 10 parts by mass per 1 part by mass of the rice seeds.
(16) A method for controlling a disease(s) of rice, the method comprising mixing the granular agrochemical composition according to (5) with rice seeds, and spraying the mixture upon sowing.
(17) A method for controlling an insect pest(s) of rice, the method comprising mixing the granular agrochemical composition according to (6) with rice seeds, and spraying the mixture upon sowing.
(18) A method for controlling weeds in a rice field, the method comprising mixing the granular agrochemical composition according to (7) with rice seeds, and spraying the mixture upon sowing.
(19) A method for regulating growth of rice, the method comprising mixing the granular agrochemical composition according to (8) with rice seeds upon sowing of the rice, and spraying the mixture upon the sowing.

### EFFECTS OF THE INVENTION

According to the present invention, a granular agrochemical composition capable of reducing the risk of occurrence of chemical injury and capable of saving the labor, and a method for spraying it, can be provided.

### MODE FOR CARRYING OUT THE INVENTION

The granular agrochemical composition, the spraying method, and the control method of the present invention are described below in detail.

The granular agrochemical composition of the present invention is a granular agrochemical composition containing an agrochemical active component, which composition is used being mixed with rice seeds and sprayed upon sowing, the composition having a short diameter of 50 to 320% of the width of the rice seeds, a long diameter of 50 to 230% of the length of the rice seeds, and a specific gravity of 1 to 4 g/cm³.

In the present description, the long diameter of the granular agrochemical composition means the longest length in the major-axis direction of the particle, and the short diameter means the longest length in the direction perpendicular to the long diameter (hereinafter referred to as "minor-axis direction"). In cases where the major-axis direction and the minor-axis direction cannot be identified, for example, in cases where the shape is a sphere or a cube, each of these means a length of the particle in any axis direction, and, in such cases, the long diameter and the short diameter have the same length. The rice in the present invention may be either upland rice or paddy rice, or may be a rice transformed by a technique such as genetic recombination. Examples of the rice seeds include germination-induced rice seeds; and rice seeds coated with a seed coating agent such as iron powder, calcium peroxide, or a molybdenum compound.

It is important for the granular agrochemical composition of the present invention to have a particle size and a specific gravity within the ranges described above. That is, when the size of the rice seeds to be sown after mixing is used as a standard by taking the width of the rice seeds as 100%, the short diameter of the particle of the granular agrochemical composition of the present invention is 50 to 320% of the width of the rice seeds. The short diameter with respect to the width of the rice seeds is preferably within the range of 50 to 240%, more preferably within the range of 80 to 200%. Such a range is advantageous from the viewpoint of preventing fractionation from the rice seeds, thereby allowing uniform mixing with the rice seeds. When the length of the rice seeds is taken as 100%, the long diameter of the granular agrochemical composition of the present invention is 50 to 230%, preferably 60 to 160%, more preferably 60 to 130% of the length of the rice seeds.

The specific gravity of the particle of the granular agrochemical composition of the present invention is within the range of 1 to 4 g/cm³, preferably within the range of 1 to 3 g/cm³. The specific gravity is more preferably appropriately selected depending on the type of the rice seeds used and whether a seed coating agent is used or not. In cases where the composition is used by mixing with uncoated rice seeds or rice seeds coated with a powder/granular calcium peroxide agent, the particle preferably has a specific gravity of 1 to 2 g/cm³. In cases where the composition is used by mixing with rice seeds coated with iron, the particle preferably has a specific gravity of 2 to 3 g/cm . When the specific gravity of the rice seeds to be sown after mixing is used as a standard by taking it as 100%, the specific gravity of the particle of the granular agrochemical composition of the present invention may be 60 to 350%, preferably 70 to 260%, more preferably 80 to 150%.

In the present invention, by adjusting the particle size and the specific gravity of the granular agrochemical composition within such ranges, fractionation is less likely to occur when the composition is mixed with rice seeds, and until the sowing operation thereafter. Moreover, since the agrochemical spraying operation in rice cultivation can be carried out at the same time as sowing of rice seeds, the labor of spraying the agrochemical on seedling trays or visiting paddy fields for spraying the agrochemical can be eliminated, so that the labor can be saved to a great extent. Further, since the method for spraying a granular agrochemical composition of the present invention can be simply carried out by mixing the composition with rice seeds and spraying the mixture, the method can be carried out by almost the same amount of labor as that of the sowing itself.

Further, in the present invention, rice seeds and the granular agrochemical composition are not attached to each other. Therefore, for example, in cases where rice seeds are sown at low density such as cases of direct sowing cultivation, rice seeds and the granular agrochemical composition drop apart from each other, so that the risk of occurrence of chemical injury due to contact with an agrochemical active component is low. Also in cases of sowing in a seedling tray, when a known technique causing a delay of elution of an agrochemical active component is applied to the granular agrochemical composition of the present invention, the risk of occurrence of chemical injury can be reduced even in cases where germination occurs under conditions where rice seeds are in contact with the granular agrochemical composition of the present invention. Thus, the present invention can be carried out, without causing chemical injury, also for agrochemical active components which have not been applicable to simultaneous sowing/spraying on a seedling tray or to coating/attachment treatment for rice seeds due to the risk of occurrence of chemical injury. The present invention therefore provides a very useful technique.

If necessary, the granular agrochemical composition of the present invention may also contain a solid carrier, surfactant, and/or other adjuvants as appropriate in addition to an agrochemical active component, and may be formulated into a granular shape. The shape of the granular agrochemical composition of the present invention is not limited as long as it is a granular shape. For example, the composition may have any of a spherical shape, nearly spherical shape, rugby-ball-like elliptic-spherical shape, oval shape, cocoon shape, columnar shape, columnar shape having rounded ends, Go-stone-like elliptic-spherical shape, shape like a gelatin capsule for oral administration of a pharmaceutical, barrel-like shape, cubic shape, and rectangular parallelepiped shape, or may have a plurality of shapes. The shape is more preferably a spherical shape, elliptic-spherical shape, or oval shape; or a columnar shape whose ratio between the long diameter and the short diameter is close to the ratio between the length and the width of the rice seeds.

Examples of agrochemical active components that may be used for the granular agrochemical composition of the present invention include components having a disease control action, components having an insect pest control action, components having a weed control action, and components having an action to control growth of the crop to be treated. These agrochemical active components are not limited as long as they are commonly used as agrochemicals. They may be used individually, or two or more of them may be used as a mixture. Examples of the agrochemical include microbicides, insecticides, herbicides, and plant growth regulators, however, the granular agrochemical composition of the present invention is not limited to any of these.

Examples of known microbicide components that may be used for the granular agrochemical composition of the present invention include azaconazole, acibenzolar-S-methyl, azoxystrobin, anilazine, amisulbrom, ametoctradin, aldimorph, isotianil, isopyrazam, isofetamid, isoprothiolane, ipconazole, iprodione, iprovalicarb, iprobenfos, imazalil, iminoctadine-tris-albesilate, iminoctadine-triacetate, imibenconazole, edifenphos, etaconazole, ethaboxam, ethirimol, ethoxyquin, etridiazole, enestroburin, enoxastrobin, epoxiconazole, organic oils, oxadixyl, oxazinylazole, oxathiapiprolin, oxycarboxin, oxine-copper, oxytetracycline, oxpoconazole-fumarate, oxolinic acid, copper dioctanoate, octhilinone, ofurace, orysastrobin, o-phenylphenol, kasugamycin, captafol, carpropamid, carbendazim, carboxin, carvone, quinoxyfen, chinomethionat, captan, quinconazole, quintozene, guazatine, cufraneb, coumoxystrobin, kresoxim-methyl, clozylacon, chlozolinate, chlorothalonil, chloroneb, cyazofamid, diethofencarb, diclocymet, dichlofluanid, diclomezine, dicloran, dichlorophen, dithianon, diniconazole, diniconazole-M, zineb, dinocap, dipymetitrone, diphenylamine, difenoconazole, cyflufenamid, diflumetorim, cyproconazole, cyprodinil, simeconazole, dimethirimol, dimethyl disulfide, dimethomorph, cymoxanil, dimoxystrobin, ziram, silthiofam, streptomycin, spiroxamine, sedaxane, zoxamide, dazomet, tiadinil, thiabendazole, thiram, thiophanate, thiophanate-methyl, thifluzamide, tecnazene, tecloftalam, tetraconazole, debacarb, tebuconazole, tebufloquin, terbinafine, dodine, dodemorph, triadimenol, triadimefon, triazoxide, trichlamide, triclopyricarb, tricyclazole, triticonazole, tridemorph, triflumizole, trifloxystrobin, triforine, tolylfluanid, tolclofos-methyl, tolnifanide, tolprocarb, nabam, natamycin, naftifine, nitrapyrin, nitrothal-isopropyl, nuarimol, copper nonyl phenol sulphonate, *Bacillus subtilis* (strain: QST 713), validamycin, valifenalate, picarbutrazox, bixafen, picoxystrobin, pydiflumetofen, bitertanol, binapacryl, biphenyl, piperalin, hymexazol, pyraoxystrobin, pyraclostrobin, pyraziflumid, pyrazophos, pyrametostrobin, pyriofenone, pyrisoxazole, pyrifenox, pyributicarb, pyribencarb, pyrimethanil, pyroquilon, vinclozolin, ferbam, famoxadone, phenazine oxide, fenamidone, fenaminstrobin, fenarimol, fenoxanil, ferimzone, fenpiclonil, fenpyrazamine, fenbuconazole, fenfuram, fenpropidin, fenpropimorph, fenhexamid, folpet, phthalide, bupirimate, fuberidazole, blasticidin-S, furametpyr, furalaxyl, furancarboxylic acid, fluazinam, fluindapyr, fluoxastrobin, fluopicolide, fluopyram, fluoroimide, fluxapyroxad, fluquinconazole, furconazole, furconazole-*cis*, fludioxonil, flusilazole, flusulfamide, flutianil, flutolanil, flutriafol, flufenoxystrobin, flumetover, flumorph, proquinazid, prochloraz, procymidone, prothiocarb, prothioconazole, bronopol, propamocarb-hydrochloride, propiconazole, propineb, probenazole, bromuconazole, flometoquin, hexaconazole, benalaxyl, benalaxyl-M, benodanil, benomyl, pefurazoate, penconazole, pencycuron, benzovindiflupyr, benthiazole, benthiavalicarb-isopropyl, penthiopyrad, penflufen, boscalid, fosetyl (alminium, calcium, sodium), polyoxin, polycarbamate, Bordeaux mixture, mancozeb, mandipropamid, mandestrobin, maneb, myclobutanil, mineral oils, mildiomycin, methasulfocarb, metam, metalaxyl, metalaxyl-M, metiram, metconazole, metominostrobin, metrafenone, mepanipyrim, meptyldinocap, mepronil, iodocarb, laminarin, phosphorous acid and salts, copper oxychloride, silver, cuprous oxide, copper hydroxide, potassium bicarbonate, sodium bicarbonate, sulfur, oxyquinoline sulfate, copper sulfate, (3,4- dichloroisothiazole -5-yl) methyl 4-(*tert*-butyl)benzoate (IUPAC Name, CAS No. 1231214-23-5), 3-((3,4-dichloroisothiazole-5-yl)methoxy)benzo[d]isothiazole-1,1-dioxide (IUPAC Name, CAS No. 957144-77-3), BAF-045 (Code No.), BAG-010 (Code No.), UK-2A (Code No.), DBEDC (dodecylbenzenesulfonic acid bisethylenediamine copper [II] salt), MIF-1002 (Code No.), TPTA (fentin-acetate), TPTC (triphenyltin chloride), TPTH (fentin hydroxide), and nonpathogenic *Erwinia carotovora.*

Examples of known insecticide components that may be used for the granular agrochemical composition of the present invention include acrinathrin, azadirachtin, azamethiphos, azinphos-ethyl, azinphos-methyl, acequinocyl, acetamiprid, acetoprole, acephate, azocyclotin, abamectin, afidopyropen, afoxolaner, amidoflumet, amitraz, alanycarb, aldicarb, aldoxycarb, allethrin (including its *d-cis-trans* body and *d-trans* body), isazophos, isamidofos, isocarbophos, isoxathion, isofenphos-methyl, isoprocarb, ivermectin, imicyafos, imidacloprid, imiprothrin, indoxacarb, esfenvalerate, ethiofencarb, ethion, ethiprole, ethylene dibromide, etoxazole, etofenprox, ethoprophos, etrimfos, emamectin benzoate, endosulfan, empenthrin, oxamyl, oxydemeton-methyl, oxydeprofos, omethoate, cadusafos, kappa-tefluthrin, kappa-bifenthrin, karanjin, cartap, carbaryl, carbosulfan, carbofuran, gamma-BHC, xylylcarb, quinalphos, kinoprene, chinomethionat, coumaphos, cryolite, clothianidin, clofentezine, chromafenozide, chlorantraniliprole, chlorethoxyfos, chlordane, chloropicrin, chlorpyrifos, chlorpyrifos-methyl, chlorfenapyr, chlorfenvinphos, chlorfluazuron, chlormephos, chloroprallethrin, cyanophos, diafenthiuron, diamidafos, cyantraniliprole, dienochlor, cyenopyrafen, dioxabenzofos, diofenolan, cyclaniliprole, dicrotophos, dichlofenthion, cycloprothrin, dichlorvos, 1,3-dichloropropene, dichloromezotiaz, dicofol, dicyclanil, disulfoton, dinotefuran, dinobuton, cyhalodiamide, cyhalothrin [including its gamma-body and lambda-body], cyphenothrin [including its (1*R*)*-trans*-body], cyfluthrin [including its beta-body], diflubenzuron, cyflumetofen, diflovidazin, cyhexatin, cypermethrin [including its alpha-body, beta-body, theta-body, and zeta-body], dimethylvinphos, dimefluthrin, dimethoate, silafluofen, cyromazine, spinetoram, spinosad, spirodiclofen, spirotetramat, spiromesifen, sulcofuron-sodium, sulfluramid, sulfoxaflor, sulfotep, diazinon, thiacloprid, thiamethoxam, tioxazafen, thiodicarb, thiocyclam, thiosultap, thionazin, thiofanox, thiometon, tetrachlorvinphos, tetradifon, tetraniliprole, tetramethylfluthrin, tetramethrin, tebupirimfos, tebufenozide, tebufenpyrad, tefluthrin, teflubenzuron, demeton-S-methyl, temephos, deltamethrin, terbufos, tralomethrin, transfluthrin, triazamate, triazophos, trichlorfon, triflumuron, triflumezopyrim, trimethacarb, tolfenpyrad, naled, nitenpyram, novaluron, noviflumuron, *Verticillium lecanii,* hydroprene, *Pasteuria penetrans* spores, vamidothion, parathion, parathion-methyl, halfenprox, halofenozide, bioallethrin, bioallethrin S-cyclopentenyl, bioresmethrin, bistrifluron, hydramethylnon, bifenazate, bifenthrin, pyflubumide, piperonyl butoxide, pymetrozine, pyraclofos, pyrafluprole, pyridaphenthion, pyridaben, pyridalyl, pyrifluquinazon, pyriprole, pyriproxyfen, pirimicarb, pyrimidifen, pyriminostrobin, pirimiphos-methyl, pyrethrine, famphur, fipronil, fenazaquin, fenamiphos, fenitrothion, fenoxycarb, fenothiocarb, phenothrin [including its (1*R*)*-trans*-body], fenobucarb, fenthion, phenthoate, fenvalerate, fenpyroximate, fenbutatin oxide, fenpropathrin, fonofos, sulfuryl fluoride, butocarboxim, butoxycarboxim, buprofezin, furathiocarb, prallethrin, fluacrypyrim, fluazaindolizine, fluazuron, fluensulfone, sodium fluoroacetate, fluxametamide, flucycloxuron, flucythrinate, flusulfamide, fluvalinate [including its tau-body], flupyradifurone, flupyrazofos, flufiprole, flufenerim, flufenoxystrobin, flufenoxuron, fluhexafon, flubendiamide, flumethrin, fluralaner, prothiofos, protrifenbute, flonicamid, propaphos, propargite, profenofos, broflanilide, profluthrin, propetamphos, propoxur, flometoquin, bromopropylate, hexythiazox, hexaflumuron, *Paecilomyces tenuipes, Paecilomyces fumosoroceus,* heptafluthrin, heptenophos, permethrin, benclothiaz, bensultap, benzoximate, bendiocarb, benfuracarb, *Beauveria tenella, Beauveria bassiana, Beauveria brongniartii,* phoxim, phosalone, fosthiazate, fosthietan, phosphamidon, phosmet, polynactins, formetanate, phorate, malathion, milbemectin, mecarbam, mesulfenfos, methomyl, metaflumizone, methamidophos, metham, methiocarb, methidathion, methyl isothiocyanate, methyl bromide, methoxychlor, methoxyfenozide, methothrin, metofluthrin, epsilon-metofluthrin, methoprene, metolcarb, mevinphos, meperfluthrin, *Monacrosporium phymatophagum,* monocrotophos, momfluorothrin, epsilon-momfluorothrin, litlure-A, litlure-B, aluminium phosphide, zinc phosphide, phosphine, lufenuron, rescalure, resmethrin, lepimectin, rotenone, fenbutatin oxide, calcium cyanide, nicotine sulfate, (*Z*)-11-tetradecenyl=acetate, (*Z*)-11-hexadecenal, (*Z*)-11-hexadecenyl=acetate, (*Z*)-9,12-tetradecadienyl=acetate, (*Z*)-9-tetradecen-1-ol, (*Z*,*E*)-9,11-tetradecadienyl=acetate, (*Z*,*E*)-9,12-tetradecadienyl=acetate, *Bacillus popilliae, Bacillus subtillis, Bacillus sphaericus, Bacillus thuringiensis* subsp. *Aizawai, Bacillus thuringiensis* subsp. *Israelensis, Bacillus thuringiensis* subsp. *Kurstaki, Bacillus thuringiensis* subsp. *Tenebrionis,* Bt proteins (Cry1Ab, Cry1Ac, Cry1Fa, Cry2Ab, mCry3A, Cry3Ab, Cry3Bb, Cry34/35Ab1), CL900167 (Code No.), DCIP (bis-(2-chloro-1-methylethyl)ether), DDT (1,1,1-trichloro-2,2-bis(4-chlorophenyl) ethane), DEP (dimethyl-2,2,2-trichloro-1-hydroxyethylphosphonate), DNOC (4,6-dinitro-o-cresol), DSP (*O*,*O*-diethyl-*O*-[4-(dimethylsulfamoyl)phenyl]-phosphorothioate), EPN (*O-*ethyl *O*-(4-nitrophenyl)phenylphosphonothioate), nuclear polyhedrosis virus occlusion body, NA-85 (Code No.), NA-89 (Code No.), NC-515 (Code No.), RU15525 (Code No.), ZDI-2501 (Code No.), XMC, Z-13-eicosen-10-one, ZXI8901 (Code No.), and ME5382 (Code No.).

Examples of known herbicide components that may be used for the granular agrochemical composition of the present invention include ioxynil, aclonifen, acrolein, azafenidin, acifluorfen (including its salts with sodium or the like), azimsulfuron, asulam, acetochlor, atrazine, anilofos, amicarbazone, amidosulfuron, amitrole, aminocyclopyrachlor, aminopyralid, amiprofos-methyl, ametryn, alachlor, alloxydim, isouron, isoxachlortole, isoxaflutole, isoxaben, isoproturon, ipfencarbazone, imazaquin, imazapic (including its salts with amine or the like), imazapyr (including its salts with isopropylamine or the like), imazamethabenz-methyl, imazamox, imazethapyr, imazosulfuron, indaziflam, indanofan, eglinazine-ethyl, esprocarb, ethametsulfuron-methyl, ethalfluralin, ethidimuron, ethoxysulfuron, ethoxyfen-ethyl, ethofumesate, etobenzanid, endothal-disodium, oxadiazon, oxadiargyl, oxaziclomefone, oxasulfuron, oxyfluorfen, oryzalin, orthosulfamuron, orbencarb, cafenstrole, carfentrazone-ethyl, karbutilate, carbetamide, quizalofop-ethyl, quizalofop-P-ethyl, quizalofop-P-tefuryl, quinoclamine, quinclorac, quinmerac, cumyluron, clacyfos, glyphosate (including its salts with sodium, potassium, ammonium, amine, propylamine, isopropylamine, dimethylamine, trimesium, or the like), glufosinate (including its salts with amine, sodium, or the like), glufosinate-P-sodium, clethodim, clodinafop-propargyl, clopyralid, clomazone, chlomethoxyfen, clomeprop, cloransulam-methyl, chloramben, chloridazon, chlorimuron-ethyl, chlorsulfuron, chlorthal-dimethyl, chlorthiamid, chlorphthalim, chlorflurenol-methyl, chlorpropham, chlorbromuron, chloroxuron, chlorotoluron, ketospiradox, saflufenacil, cyanazine, cyanamide, diuron, diethatyl-ethyl, dicamba (including its salts with amine, diethylamine, isopropylamine, diglycolamine, sodium, lithium, or the like), cycloate, cycloxydim, diclosulam, cyclosulfamuron, cyclopyrimorate, dichlobenil, diclofop-P-methyl, diclofop-methyl, dichlorprop, dichlorprop-P, diquat, dithiopyr, siduron, dinitramine, cinidon-ethyl, cinosulfuron, dinoterb, cyhalofop-butyl, diphenamid, difenzoquat, diflufenican, diflufenzopyr, simazine, dimethachlor, dimethametryn, dimethenamid, dimethenamid-P, simetryn, dimepiperate, dimefuron, cinmethylin, swep, sulcotrione, sulfentrazone, sulfosulfuron, sulfometuron-methyl, sethoxydim, terbacil, daimuron, dalapon, thiazopyr, tiafenacil, thiencarbazone (including its sodium salt, methyl ester, and the like), tiocarbazil, thiobencarb, thidiazimin, thifensulfuron-methyl, desmedipham, desmetryne, thenylchlor, tebutam, tebuthiuron, tepraloxydim, tefuryltrione, tembotrione, terbuthylazine, terbutryn, terbumeton, topramezone, tralkoxydim, triaziflam, triasulfuron, triafamone, tri-allate, trietazine, triclopyr, triclopyr-butotyl, tritosulfuron, trifludimoxazin, triflusulfuron-methyl, trifluralin, trifloxysulfuron-sodium, tribenuron-methyl, tolpyralate, naptalam (including its salts with sodium or the like), naproanilide, napropamide, napropamide-M, nicosulfuron, neburon, norflurazon, vemolate, halauxifen-benzyl, paraquat, halauxifen-methyl, haloxyfop, haloxyfop-P, haloxyfop-etotyl, halosulfuron-methyl, picloram, picolinafen, bicyclopyrone, bispyribac-sodium, pinoxaden, bifenox, piperophos, pyraclonil, pyrasulfotole, pyrazoxyfen, pyrazosulfuron-ethyl, pyrazolynate, bilanafos, pyraflufen-ethyl, pyridafol, pyrithiobac-sodium, pyridate, pyriftalid, pyributicarb, pyribenzoxim, pyrimisulfan, pyriminobac-methyl, pyroxasulfone, pyroxsulam, phenisopham, fenuron, fenoxasulfone, fenoxaprop-P-ethyl, fenquinotrione, fenthiaprop-ethyl, fentrazamide, phenmedipham, foramsulfuron, butachlor, butafenacil, butamifos, butylate, butenachlor, butralin, butroxydim, flazasulfuron, flamprop (including its methyl, ethyl, and isopropyl esters), flamprop-M (including its methyl, ethyl, and isopropyl esters), primisulfuron-methyl, fluazifop-butyl, fluazifop-P-butyl, fluazolate, fluometuron, fluoroglycofen-ethyl, flucarbazone-sodium, fluchloralin, flucetosulfuron, fluthiacet-methyl, flupyrsulfuron-methyl-sodium, flufenacet, flufenpyr-ethyl, flupropanate, flupoxame, flumioxazin, flumiclorac-pentyl, flumetsulam, fluridone, flurtamone, fluroxypyr, flurochloridone, pretilachlor, procarbazone-sodium, prodiamine, prosulfuron, prosulfocarb, propaquizafop, propachlor, propazine, propanil, propyzamide, propisochlor, propyrisulfuron, propham, profluazol, propoxycarbazone-sodium, profoxydim, bromacil, brompyrazon, prometryn, prometon, bromoxynil (including its ester bodies with butyric acid, octanoic acid, heptanoic acid, or the like), bromofenoxim, bromobutide, florasulam, pethoxamid, benazolin, penoxsulam, heptamaloxyloglucan, beflubutamid, pebulate, bencarbazone, pendimethalin, benzfendizone, bensulide, bensulfuron-methyl, benzobicyclon, benzofenap, bentazone, pentanochlor, pentoxazone, benfluralin, benfuresate, fosamine, fomesafen, mecoprop (including its salts with sodium, potassium, isopropylamine, triethanolamine, dimethylamine, or the like), mecoprop-P-potassium, mesosulfuron-methyl, mesotrione, metazachlor, metazosulfuron, methabenzthiazuron, metamitron, metamifop, methiozolin, methyldymuron, metoxuron, metosulam, metsulfuron-methyl, metobromuron, metobenzuron, metolachlor, metribuzin, mefenacet, monolinuron, molinate, iodosulfuron, iodosulfulon-methyl-sodium, iofensulfuron, iofensulfuron-sodium, lactofen, linuron, rimsulfuron, lenacil, 2,3,6-TBA (2,3,6-trichlorobenzoic acid), 2,4,5-T (2,4,5-trichlorophenoxyacetic acid), 2,4-D (2,4-dichlorophenoxyacetic acid) (including its salts with amine, diethylamine, triethanolamine, isopropylamine, sodium, lithium, or the like), 2,4-DB (4-(2,4-dichlorophenoxy)butyric acid), AE-F-150944 (Code No.), DNOC (4,6-dinitro-*O*-cresol) (including its salts with amine, sodium, or the like), EPTC (S-ethyldipropylthiocarbamate), MCPA (2-methyl-4-chlorophenoxyacetic acid), MCPA-thioethyl, MCPB (2-methyl-4-chlorophenoxybutyric acid) (including its sodium salt, ethyl ester, and the like), SYP-298 (Code No.), SYP-300 (Code No.), S-metolachlor, and TCA (2,2,2-trichloroacetic acid) (including its salts with sodium, calcium, ammonia, or the like).

Examples of known plant growth regulator components that may be used for the granular agrochemical composition of the present invention include 1-naphthylacetamide, 1-methylcyclopropene, 2,6-diisopropylnaphthalene, 4-CPA (4-chlorophenoxyacetic acid), 4-oxo-4-(2-phenylethyl) aminobutyric acid (IUPAC Name, CAS No. 1083-55-2), *n*-decanol, aviglycine, ancymidol, inabenfide, indole acetic acid, indole butyric acid, uniconazole, uniconazole-P, ethychlozate, ethephon, epocholeone, carvone, cloxyfonac, cloxyfonac-potassium, cloprop, chlormequat, cytokinins, cyclanilide, dikegulac, gibberellins, dimethipin, sintofen, daminozide, thidiazuron, triacontanol, trinexapac-ethyl, paclobutrazol, flumetralin, flurprimidol, flurenol, prohydrojasmon, prohexadione-calcium, benzylaminopurine, forchlorfenuron, maleic hydrazide, mepiquat chloride, mefluidide, and calcium peroxide.

Depending on the type of the agrochemical active component, the content of the agrochemical active component in the granular agrochemical composition of the present invention may be appropriately selected within the range of usually 0.01 to 99.9%, preferably 0.1 to 50%, more preferably 0.1 to 35%. In the present description, "%" represents percent by mass.

In the granular agrochemical composition of the present invention, compounds known to be safeners may also be included in addition to the above-described agrochemical active component, if necessary. Examples of known safener components that may be used for the granular agrochemical composition of the present invention include isoxadifen, isoxadifen-ethyl, oxabetrinil, cloquintcet-mexyl, cyometrinil, dichlormid, dicyclonone, cyprosulfamide, 1,8-naphthalic anhydride, fenchlorazole-ethyl, fenclorim, furilazole, fluxofenim, flurazole, benoxacor, mefenpyr, mefenpyr-ethyl, mefenpyr-diethyl, lower alkyl substituted benzoate, PPG-1292 (2,2-dichloro-*N*-(1,3-dioxan-2-ylmethyl)-*N*-(2-propenyl)acetamide), MG-191 (2-dichloromethyl-2-methyl-1,3-dioxane), R-29148 (3-dichloroacetyl-2,2,5-trimethyl-1,3-oxazolidine), AD-67 (4-dichloroacetyl-1-oxa-4-azaspiro[4.5]decane), MON4660 (Code No.), *N*-(2-methoxybenzoyl)-4-[(methylaminocarbonyl)amino]benzenesulfonamide (IUPAC Name, CAS No.129531-12-0), DKA-24 (*N*1, *N*2-diallyl-*N*2-dichloroacetylglycinamide), and TI-35 (Code No.). These safener components may be used individually, or two or more of them may be used as a mixture.

The total of the mixing ratios of the agrochemical active component and the safener is usually 0.1 to 70 parts by mass, preferably 1 to 50 parts by mass with respect to 100 parts by mass of the granular agrochemical composition of the present invention.

Although examples of components of known microbicides, insecticides, herbicides, plant growth regulators, and safeners that may be used for the granular agrochemical composition of the present invention are shown above, the agrochemical active components and the safener components that may be used for the granular agrochemical composition of the present invention are not limited to these.

Besides the agrochemical active component described above, the granular agrochemical composition of the present invention may contain an agriculturally acceptable component such as a useful microorganism, fertilizer, or soil conditioner.

Examples of solid carriers that may be used for the granular agrochemical composition of the present invention include water-soluble carriers and water-insoluble carriers, and these carriers may also be used in combination. Examples of the water-soluble carriers include organic or inorganic acid salts such as ammonium sulfate, ammonium bicarbonate, ammonium nitrate, ammonium chloride, potassium chloride, sodium sulfate, magnesium sulfate, sodium citrate, sodium carbonate, and sodium hydrogen carbonate; organic acids such as citric acid and succinic acid; saccharides such as sucrose and lactose; urea and the like. As a water-insoluble carrier, a fine mineral powder is commonly used. Examples of the fine mineral powder include clays, calcium carbonate, bentonite, talc, diatomaceous earth, calcium stearate, white carbon and the like. The mixing ratio of these solid carriers is usually 5 to 80 parts by mass, preferably 10 to 75 parts by mass with respect to 100 parts by mass of the granular agrochemical composition of the present invention.

As a surfactant that may be used for the granular agrochemical composition of the present invention, a surfactant commonly used for agrochemical formulations may be used. Examples of the surfactant include nonionic surfactants such as polyethylene glycol higher fatty acid esters, polyoxyethylene alkyl ethers, polyoxyethylene alkyl aryl ethers, polyoxyethylene aryl phenyl ethers, sorbitan monoalkylate, acetylene alcohols, and acetylene diols, and alkylene oxide adducts thereof; anionic surfactants and the like such as alkyl aryl sulfonic acid salts, dialkyl sulfonic acid salts, lignin sulfonic acid salts, naphthalene sulfonic acid salts and condensates thereof, alkyl sulfuric acid ester salts, alkyl phosphoric acid ester salts, alkyl aryl sulfuric acid ester salts, alkyl aryl phosphoric acid ester salts, polyoxyethylene alkyl ether sulfuric acid ester salts, polyoxyethylene alkyl aryl ether sulfuric acid ester salts, polyoxyethylene aryl phenyl ether phosphoric acid ester salts, and polycarboxylic acid-type polymer activating agents; silicone-based surfactants; and fluorine-based surfactants. These surfactants may be used individually, or two or more of these may be used as a mixture. The mixing ratio of the surfactants is usually 0.1 to 30 parts by mass, preferably 0.5 to 20 parts by mass, more preferably 2 to 10 parts by mass with respect to 100 parts by mass of the granular agrochemical composition of the present invention.

Further, in the granular agrochemical composition of the present invention, the following low-specific-gravity materials may be included when necessary for adjusting the specific gravity of the composition to a preferred level. Examples of such materials include pearlites such as pearlstone and obsidian; shirasu balloons composed of shirasu; Fillite prepared by firing with an alumino-silicate compound; microballoons prepared by foaming of sodium silicate or borax; pumice; granular diatomaceous earth; granular activated carbon; wood powder; cork powder; phenolic microballoons composed of a phenolic resin; Ecosphere composed of an epoxy resin; polyurethane foam composed of polyurethane; microspheres composed of polyacrylonitrile and the like. In cases where such low-specific-gravity materials are included, they may be included in an amount of 0.1 to 20 parts by mass, preferably 0.3 to 10 parts by mass with respect to 100 parts by mass of the granular agrochemical composition of the present invention.

In addition, the granular agrochemical composition of the present invention may contain a binder, organic solvent, or the like as another adjuvant, if necessary.

The binder may be a binder commonly used for granular agrochemical compositions. The binder is preferably a water-soluble substance. Examples of the binder include carboxymethyl cellulose sodium salt, dextrin, soluble starch, xanthan gum, guar seed gum, sucrose, polyvinyl pyrrolidone, polyvinyl alcohol, polyacrylic acid sodium salt, polyethylene glycols having an average molecular weight of 6000 to 20,000, polyethylene oxides having an average molecular weight of 100,000 to 5,000,000 and the like. The mixing ratio of these binders is usually 0.01 to 10 parts by mass, preferably 0.1 to 5 parts by mass with respect to 100 parts by mass of the granular agrochemical composition of the present invention.

An organic solvent is used in cases where the agrochemical active component is dissolved. Examples of organic solvents that may be used include dioctyl phthalate, methylnaphthalene, alkylpyrrolidone, phenylxylyl ethane, glycerin, alkylene glycol and the like. High boiling point solvents are preferred. The mixing ratio of these organic solvents is usually 10 to 200 parts by mass with respect to 100 parts by mass of the agrochemical active component.

The granular agrochemical composition of the present invention is prepared by inclusion of the above-described agrochemical active component and, if necessary, a solid carrier, surfactant, other adjuvants, and/or other effective components, followed by further adding water thereto and molding the resulting mixture into a granular shape. The method of molding is not limited. The method is preferably a method in which all materials are mixed together and then water is added thereto, followed by kneading the mixture and performing granulation by extrusion from a plate on which a hole(s) having a certain size is/are formed. In the present invention, the size of each hole formed on the plate is generally 2 to 8 mm. The obtained granulated product is preferably dried such that the water content is within the range of 0.3 to 6 parts by mass with respect to 100 parts by mass of the composition. Alternatively, the agrochemical active component may be provided as a liquid, or dissolved in an organic solvent to provide a liquid, and then the materials other than the agrochemical active component may be granulated, molded, and dried by the same method as described above, followed by adsorbing the liquid agrochemical active component thereto.

The granular agrochemical composition of the present invention is usually molded such that the short diameter of the particle is 2 to 8 mm, preferably 2 to 6 mm. For better prevention of fractionation from rice seeds and more uniform mixing treatment, the long diameter of the particle may be within the range of 5 to 15 mm, preferably within the range of 6 to 10 mm. In cases where the shape of the particle is a spherical shape or a cubic shape, the composition is preferably molded such that the particle size or the length of each side as the diameter of the particle is uniformly or almost uniformly adjusted to fall within the range of 2 to 8 mm, more preferably within the range of 2 to 6 mm. In cases where the shape of the particle is a non-spherical or non-cubic particle shape, the composition is preferably molded such that the short diameter of the particle is uniformly or almost uniformly adjusted to fall within the range of 2 to 8 mm, more preferably within the range of 2 to 6 mm, and such that the long diameter of the particle is uniformly or almost uniformly adjusted to fall within the range of 5 to 15 mm, more preferably within the range of 6 to 10 mm. Further, the particle size is more preferable to be appropriately selected depending on the type of the rice seeds used and whether a seed coating agent is used or not. More specifically, in cases where the type of the rice seeds used is a short-grain rice, the long diameter of the particle is more preferably 5 to 10 mm, and in cases of a long-grain rice, the long diameter of the particle is more preferably 8 to 15 mm. In cases where rice seeds coated with an oxygen-generating agent such as a powder/granular calcium peroxide agent or with iron powder are used, a granular agrochemical composition having a rather large particle size is preferably used. More specifically, the short diameter of the particle may be 3 to 6 mm, more preferably 4 to 6 mm in such cases.

The granular agrochemical composition of the present invention may be used for either transplantation cultivation, in which rice seeds are sown in a seedling tray or the like, and seedlings are raised, followed by their transplantation to a paddy field, or direct sowing cultivation, in which rice seeds are directly sown in a paddy field and cultivated. However, the composition is suitably used for direct sowing cultivation of rice, especially paddy rice. The direct sowing cultivation may be either direct sowing cultivation under flooded conditions or direct sowing cultivation on dry rice field.

The amount of the granular agrochemical composition of the present invention to be applied may be appropriately selected depending on the type of the agrochemical active component, the target to be controlled, the usage, the period of use, and the like. The composition may be used in an amount within the range of usually 0.001 to 10 parts by mass, preferably 0.01 to 10 parts by mass, more preferably 0.1 to 3 parts by mass, still more preferably 0.3 to 1 part by mass with respect to 1 part by mass of uncoated rice seeds. The mass of coated rice seeds needs to be corrected taking into account the mass of the coating agent used. For example, in a case where 1 part by mass of rice seeds are coated with 2 parts by mass of a powder/granular calcium peroxide agent, the composition may be used in an amount within the range of 0.003 to 3 parts by mass, preferably 0.03 to 1 part by mass, more preferably 0.1 to 0.3 part by mass with respect to 1 part by mass of the coated rice seeds.

The method for spraying a granular agrochemical composition of the present invention includes: a mixing step of mixing the granular agrochemical composition with rice seeds; and a spraying step of spraying the mixture obtained in the mixing step.

The mixing step may be carried out manually or using a machine such that a desired ratio between the rice seeds and the granular agrochemical composition of the present invention is achieved. In this process, the rice seeds are mixed with the granular agrochemical composition of the present invention as uniformly as possible.

The mixing amount of the granular agrochemical composition of the present invention in the above mixture may be appropriately selected depending on the type of the agrochemical active component, the target to be controlled, the usage, the period of use, and the like. The mixing amount is preferably 0.001 to 10 parts by mass with respect to 1 part by mass of the rice seeds.

In the spraying step, the mixture obtained in the mixing step may be sown and sprayed by a method used for conventional rice seeds, such that a desired seeding density is achieved. In cases where a seedling tray is used in transplantation cultivation, the mixture obtained in the mixing step may be sprayed on a medium for raising seedlings, and conventional operations of sowing and raising seedlings may be carried out. In direct sowing cultivation, the mixture obtained in the mixing step may be sprayed on the surface of a paddy field in a flooded state according to a method of direct sowing cultivation under flooded conditions, or may be sprayed on a paddy field in a drained state according to a method of direct sowing cultivation in a dry rice field, followed by flooding the paddy field.

The spraying of the mixture may be carried out manually; using a power granule sprayer, riding paddy field management machine, or the like; or using an aircraft, manned helicopter, or unmanned helicopter.

The method for spraying a granular agrochemical composition of the present invention is preferably used for direct sowing cultivation, that is, when rice seeds of paddy rice are directly sown by spraying of the mixture in the spraying step.

By spraying the mixture of rice seeds and the granular agrochemical composition of the present invention as described above, sowing and control by an agrochemical can be carried out at the same time. In addition, when necessary, another agrochemical, useful microorganism, fertilizer, soil conditioner, and/or the like may be mixed therewith, or may be used before or after the spraying.

In the method for controlling a disease(s) of rice of the present invention, the granular agrochemical composition of the present invention is mixed with rice seeds, and the mixture is sprayed upon sowing. The granular agrochemical composition contains a component having a disease control action as an agrochemical active component. Examples of such a component include the microbicide components described above and those components may be used individually, or two or more of them may be used in combination. The above-described agrochemical active components other than microbicide components; safeners; and agriculturally acceptable components; may also be contained.

In the method for controlling an insect pest(s) of rice of the present invention, the granular agrochemical composition of the present invention is mixed with rice seeds, and the mixture is sprayed upon sowing. The granular agrochemical composition contains a component having an insect pest control action as an agrochemical active component. Examples of such a component include the insecticide components described above and those components may be used individually, or two or more of them may be used in combination. The above-described agrochemical active components other than insecticide components; safeners; and agriculturally acceptable components; may also be contained.

In the method for controlling weeds in a rice field of the present invention, the granular agrochemical composition of the present invention is mixed with rice seeds, and the mixture is sprayed upon sowing. The granular agrochemical composition contains a component having a weed control action as an agrochemical active component. Examples of such a component include the herbicide components described above and those components may be used individually, or two or more of them may be used in combination. The above-described agrochemical active components other than herbicide components; safeners; and agriculturally acceptable components; may also be contained.

In the method for regulating growth of rice of the present invention, the granular agrochemical composition of the present invention is mixed with rice seeds, and the mixture is sprayed upon sowing. The granular agrochemical composition contains, as an agrochemical active component, a component having an action to regulate growth of the crop to be treated. Examples of such a component include the plant growth regulator components described above and those components may be used individually, or two or more of them may be used in combination. The above-described agrochemical active components other than plant growth regulator components; safeners; and agriculturally acceptable components; may also be contained.

### EXAMPLES

Examples of the present invention are described below, but the present invention is not limited to these Examples.

### (Example 1) Formulation Example 1

After uniformly mixing 1.2 parts of pyriminobac-methyl, 2.1 parts of bensulfuron methyl, 9 parts of mefenacet, 4 parts of polyoxyethylene aryl phenyl ether adsorbed to 4 parts of white carbon, 2.5 parts of acetylene alcohol adsorbed to 2.5 parts of white carbon, 1 part of polyvinyl alcohol, 6 parts of bentonite, 10 parts of potassium chloride, and 57.7 parts of sodium sulfate, the resulting mixture was subjected to impact crushing. The powder obtained was uniformly mixed in a high-speed stirrer, and an appropriate amount of water was added thereto. After kneading the mixture, extrusion granulation from 4-mm holes was carried out. The obtained granulated product was dried to obtain a granular agrochemical composition. The particle of the granular agrochemical composition obtained had a short diameter of 4 mm, a long diameter of 8 mm, and a specific gravity of 1.6 g/cm³. The short diameter corresponded to 100% of the width of the coated rice seeds of a Japonica rice Koshihikari used in the following Test Examples 1 and 2, and the long diameter corresponded to 114% of the length of these rice seeds. The diameters also corresponded to 125% and 123%, respectively, of the width and the length of uncoated rice seeds of the Japonica rice Koshihikari. The diameters also corresponded to 160% and 80%, respectively, of the width and the length of germination-induced rice seeds of an Indica rice Suphanburi No. 1. The diameters also corresponded to 100% and 114%, respectively, of the width and the length of the coated rice seeds of a Japonica rice Hitomebore used in Test Example 3.

### (Example 2) Formulation Example 2

After uniformly mixing 30 parts of pyroquilon, 2 parts of sodium lignin sulfonate, 3 parts of polyoxyethylene aryl phenyl ether phosphoric acid ester salt adsorbed to 3 parts of white carbon, 3 parts of dextrin, and 54 parts of ammonium sulfate, the resulting mixture was subjected to impact crushing. The powder obtained and 5 parts of shirasu balloon were uniformly mixed in a high-speed stirrer, and an appropriate amount of water was added thereto. After kneading the mixture, extrusion granulation from 3-mm holes was carried out. The obtained granulated product was dried to obtain a granular agrochemical composition. The particle of the granular agrochemical composition obtained had a short diameter of 3 mm, a long diameter of 6 mm, and a specific gravity of 1.4 g/cm³. The short diameter corresponded to 75% of the width of the coated rice seeds of the Japonica rice Koshihikari used in the following Test Examples 1 and 2, and the long diameter corresponded to 86% of the length of these rice seeds. The diameters also corresponded to 94% and 92%, respectively, of the width and the length of uncoated Japonica rice Koshihikari. The diameters also corresponded to 120% and 60%, respectively, of the width and the length of germination-induced rice seeds of the Indica rice Suphanburi No. 1. The diameters also corresponded to 75% and 86%, respectively, of the width and the length of the coated rice seeds of the Japonica rice Hitomebore used in Test Example 3.

### (Example 3) Formulation Example 3

After mixing 1 part by mass of pyrimisulfan, 290 parts by mass of calcium carbonate, and 100 parts by mass of barium sulfate in a mortar, the mixture was kneaded with a small amount of tap water, followed by performing granulation. The obtained granulated product was dried to obtain an agrochemical composition having a rice-grain-like shape. The particle of the granular agrochemical composition obtained had a short diameter of 5 mm, a long diameter of 8 mm, and a specific gravity of 2.3 g/cm³. The short diameter corresponded to 125% of the width of the coated rice seeds of the Japonica rice Koshihikari used in the following Test Examples 1 and 2, and the long diameter corresponded to 114% of the length of these rice seeds. The diameters also corresponded to 156% and 123%, respectively, of the width and the length of uncoated Japonica rice Koshihikari. The diameters also corresponded to 200% and 80%, respectively, of the width and the length of germination-induced rice seeds of the Indica rice Suphanburi No. 1. The diameters also corresponded to 125% and 114%, respectively, of the width and the length of the coated rice seeds of the Japonica rice Hitomebore used in Test Example 3.

### (Comparative Example 1) Formulation Example 4

After uniformly mixing 1.2 parts of pyriminobac-methyl, 2.1 parts of bensulfuron methyl, 9 parts of mefenacet, 4 parts of polyoxyethylene aryl phenyl ether adsorbed to 4 parts of white carbon, 2.5 parts of acetylene alcohol adsorbed to 2.5 parts of white carbon, 1 part of polyvinyl alcohol, 5 parts of bentonite, 10 parts of potassium chloride, and 56.7 parts of sodium sulfate, the resulting mixture was subjected to impact crushing. The powder obtained and 2 parts of microspheres were uniformly mixed in a high-speed stirrer, and an appropriate amount of water was added thereto. After kneading the mixture, extrusion granulation from 4-mm holes was carried out. The obtained granulated product was dried to obtain a granular agrochemical composition. The particle of the granular agrochemical composition obtained had a short diameter of 4 mm, a long diameter of 8 mm, and a specific gravity of 0.8 g/cm³. The short diameter corresponded to 100% of the width of the coated rice seeds of the Japonica rice Koshihikari used in the following Test Examples 1 and 2, and the long diameter corresponded to 114% of the length of these rice seeds. The diameters also corresponded to 125% and 123%, respectively, of the width and the length of uncoated Japonica rice Koshihikari. The diameters also corresponded to 160% and 80%, respectively, of the width and the length of germination-induced rice seeds of the Indica rice Suphanburi No. 1. The diameters also corresponded to 100% and 114%, respectively, of the width and the length of the coated rice seeds of the Japonica rice Hitomebore used in Test Example 3.

### (Comparative Example 2) Formulation Example 5

After uniformly mixing 1.2 parts of pyriminobac-methyl, 2.1 parts of bensulfuron methyl, 9 parts of mefenacet, 4 parts of polyoxyethylene aryl phenyl ether adsorbed to 4 parts of white carbon, 2.5 parts of acetylene alcohol adsorbed to 2.5 parts of white carbon, 1 part of polyvinyl alcohol, 6 parts of bentonite, 10 parts of potassium chloride, and 57.7 parts of sodium sulfate, the resulting mixture was subjected to impact crushing. The powder obtained was uniformly mixed in a high-speed stirrer, and an appropriate amount of water was added thereto. After kneading the mixture, extrusion granulation from 0.8-mm holes was carried out. The obtained granulated product was dried to obtain a granular agrochemical composition. The particle of the granular agrochemical composition obtained had a short diameter of 0.8 mm, a long diameter of 5 mm, and a specific gravity of 1.6 g/cm³. The short diameter corresponded to 20% of the width of the coated rice seeds of the Japonica rice Koshihikari used in the following Test Examples 1 and 2, and the long diameter corresponded to 71% of the length of these rice seeds. The diameters also corresponded to 25% and 77%, respectively, of the width and the length of uncoated Japonica rice Koshihikari. The diameters also corresponded to 32% and 50%, respectively, of the width and the length of germination-induced rice seeds of the Indica rice Suphanburi No. 1. The diameters also corresponded to 20% and 71%, respectively, of the width and the length of the coated rice seeds of the Japonica rice Hitomebore used in Test Example 3.

### (Comparative Example 3) Formulation Example 6

After uniformly mixing 30 parts of pyroquilon, 2 parts of sodium lignin sulfonate, 3 parts of polyoxyethylene aryl phenyl ether phosphoric acid ester salt adsorbed to 3 parts of white carbon, 3 parts of dextrin, and 54 parts of ammonium sulfate, the resulting mixture was subjected to impact crushing. The powder obtained and 5 parts of shirasu balloon were uniformly mixed in a high-speed stirrer, and an appropriate amount of water was added thereto. After kneading the mixture, extrusion granulation from 1.2-mm holes was carried out. The obtained granulated product was dried to obtain a granular agrochemical composition. The particle of the granular agrochemical composition obtained had a short diameter of 1.2 mm, a long diameter of 6 mm, and a specific gravity of 1.4 g/cm³. The short diameter corresponded to 30% of the width of the coated rice seeds of the Japonica rice Koshihikari used in the following Test Examples 1 and 2, and the long diameter corresponded to 86% of the length of these rice seeds. The diameters also corresponded to 38% and 92%, respectively, of the width and the length of uncoated Japonica rice Koshihikari. The diameters also corresponded to 48% and 60%, respectively, of the width and the length of germination-induced rice seeds of the Indica rice Suphanburi No. 1. The diameters also corresponded to 30% and 86%, respectively, of the width and the length of the coated rice seeds of the Japonica rice Hitomebore used in Test Example 3.

### (Test Example 1) Test of Mixing with Rice Seeds

In buckets, 300 g each of the granular agrochemical compositions of Example 1 and Comparative Examples 1 and 2 were placed, and thereafter 2 kg (including the mass of the coating agent) of germinated rice seeds of the Japonica rice Koshihikari were coated with a powder/granular calcium peroxide agent and placed in each bucket, and the bucket was shaken by hand for 5 minutes to mix each granular agrochemical composition with the rice seeds sufficiently. Thereafter, all buckets were arranged in a single container, and vibration was given thereto by sliding the container on gravel for 10 minutes. Similarly, in buckets each containing 300 g of the granular agrochemical composition of Example 2 or Comparative Example 3, 1 kg of uncoated Japonica rice Koshihikari or germination-induced rice seeds of the Indica rice Suphanburi No. 1 were added, and each mixture was mixed and then given vibration. The degree of fractionation of the granular agrochemical composition and the rice seeds in each bucket after the vibration was visually observed. The results are shown in Table 1. The rice seeds of the Japonica rice Koshihikari coated with the powder/granular calcium peroxide agent used herein had a grain length of 7 mm, a grain width of 4 mm, and a grain thickness of 3.5 mm. The uncoated rice seeds of the Japonica rice Koshihikari used herein had a grain length of 6.5 mm, a grain width of 3.2 mm, and a grain thickness of 2 mm. The uncoated germination-induced rice seeds of the Indica rice Suphanburi No. 1 used herein had a grain length of 10 mm, a grain width of 2.5 mm, and a grain thickness of 2 mm.

**[Table 1]**

| Rice seeds | Granular agrochemical composition | Mixed state immediately after mixing | State of fractionation after vibration |
|---|---|---|---|
| Koshihikari rice seeds coated with a powder/granular calcium peroxide agent | Example 1 | Uniformly mixed | Almost no fractionation |
| | Comparative Example 1 | Almost uniformly mixed | Severe fractionation (granular agrochemical composition in the upper layer, and rice seeds in the lower layer) |
| | Comparative Example 2 | Slight localization of the granular agrochemical composition in the circumference and the lower layer | Severe fractionation (granular agrochemical composition in the lower layer, and rice seeds in the upper layer) |
| Uncoated Koshihikari rice seeds | Example 2 | Uniformly mixed | Almost no fractionation |
| | Comparative Example 3 | Almost uniformly mixed | Severe fractionation (granular agrochemical composition in the lower layer, and rice seeds in the upper layer) |
| Uncoated Suphanburi No. 1 rice seeds | Example 2 | Uniformly mixed | Almost no fractionation |
| | Comparative Example 3 | Almost uniformly mixed | Slight fractionation (granular agrochemical composition in the lower layer, and rice seeds in the upper layer) |

As shown in Table 1, the granular agrochemical composition of the present invention can be easily uniformly mixed with rice seeds, and fractionation due to vibration after the mixing does not occur. Therefore, the composition can be favorably handled when it is mixed with rice seeds.

### (Test Example 2) Spraying Test

The buckets containing each of the mixtures with Examples 1 and 2 and Comparative Examples 1 to 3 obtained in Test Example 1 were shaken again by hand for 5 minutes to mix each granular agrochemical composition and the rice seeds, and each mixture was then sprayed by a knapsack power granule sprayer for 1 minute. Thereafter, the numbers of granular agrochemical composition particles and rice seeds dropped in 50 cm × 50 cm containers placed at distances of 10 m, 7 m, 4 m, and 2 m from the spraying point were counted. The results are shown in Table 2.

**[Table 2]**

| Rice seeds | Granular agrochemical composition | Number of particles dropped at each distance (rice seeds) | | | | Number of particles dropped at each distance (composition) | | | |
|---|---|---|---|---|---|---|---|---|---|
| | | 10 m | 7 m | 4 m | 2 m | 10 m | 7 m | 4 m | 2 m |
| Koshihikari rice seeds coated with a powder/granular calcium peroxide agent | Example 1 | 83 | 108 | 97 | 71 | 7 | 9 | 10 | 5 |
| | Comparative Example 1 | 115 | 126 | 103 | 98 | 0 | 0 | 2 | 6 |
| | Comparative Example 2 | 12 | 25 | 21 | 18 | 214 | 691 | 315 | 137 |
| Uncoated Koshihikari rice seeds | Example 2 | 76 | 99 | 105 | 92 | 24 | 27 | 21 | 18 |
| | Comparative Example 3 | 23 | 41 | 46 | 39 | 107 | 185 | 169 | 92 |
| Uncoated Suphanburi No. 1 rice seeds | Example 2 | 64 | 87 | 96 | 91 | 30 | 26 | 29 | 23 |
| | Comparative Example 3 | 12 | 19 | 34 | 42 | 89 | 152 | 127 | 43 |

### (Test Example 3) Comparative Test on Biological Effect and Chemical injury

Using rice seeds of the Japonica rice Hitomebore, iron-coated rice seeds having a coating ratio of 0.5 (rice seeds : iron powder = 1:0.5) were prepared. The ratios of the quantities of the materials used for the preparation of the iron-coated rice seeds are shown in Table 3. The iron-coated rice seeds had a grain length of 7 mm, a grain width of 4 mm, and a grain thickness of 3.5 mm.

In a 200-cm² pot, paddy field soil was placed, and tillage was carried out, followed by sowing seeds of *Echinochloa oryzicola* and *Scirpus juncoides* on the soil surface. The iron-coated rice seeds were sown at 4 grains/pot, and immediately thereafter, 1 grain of the granular agrochemical composition prepared in Example 3 was applied to the soil surface. In Comparative Example 4, 20 mg of Best Partner (registered trademark) granules (manufactured by Kumiai Chemical Industry Co., Ltd.; containing 0.67% pyrimisulfan) were similarly applied to the soil surface. After the sowing, water was gently introduced thereto to allow flooding to a 4-cm depth. On Day 7 after the sowing, the water was removed using a tube. When the paddy rice has grown to the one-leaf stage, flooding was allowed again to a depth of 4 cm. On Day 15 after the sowing, the germination rate of the paddy seeds and the growth-inhibitory effect on the weeds were judged. The results are shown in Table 4. The Best Partner granules used had a short diameter and a long diameter corresponding to 30% and 14 to 57%, respectively, of the width and the length of the rice seeds used. The germination rate of the paddy seeds was expressed by %, and the growth-inhibitory effect on the weeds was represented according to the following criterion.
(Criterion) 0: no inhibition-100: complete death

**[Table 3]**

| Amount of each material per 1 kg of dry seeds | |
|---|---|
| Dry rice seeds | 1 kg |
| Iron powder | 0.5 kg |
| Mixed calcined gypsum | 0.05 kg |
| Finishing calcined gypsum | 0.05 kg |

**[Table 4]**

| | Germination rate of rice (%) | *Echinochloa oryzicola* | *Scirpus juncoides* | Annual weeds |
|---|---|---|---|---|
| Granular agrochemical composition (Example 3) | 75 | 98 | 100 | 100 |
| Best Partner granules (Comparative Example 4) | 75 | 90 | 100 | 100 |
| Untreated (Test Example 2) | 75 | 0 | 0 | 0 |

The granular agrochemical composition of the present invention can be evenly and uniformly sprayed as a mixture with rice seeds even by a power granule sprayer, and does not disturb spraying of the rice seeds. Moreover, the granular agrochemical composition of the present invention was found to show the same biological effect as that of the commercially available granular agrochemical composition, without causing chemical injury.

## Claims

1. A granular agrochemical composition comprising an agrochemical active component, which composition is used being mixed with rice seeds and sprayed upon sowing, said composition having a short diameter of 50 to 320% of the width of the rice seeds, a long diameter of 50 to 230% of the length of the rice seeds, and a specific gravity of 1 to 4 g/cm³.

2. The granular agrochemical composition according to claim 1, whose short diameter is 2 to 8 mm.

3. The granular agrochemical composition according to claim 1 or 2, for direct sowing cultivation of paddy rice.

4. The granular agrochemical composition according to claim 3, wherein said direct sowing cultivation is direct sowing cultivation under flooded conditions or direct sowing cultivation on dry rice field.

5. The granular agrochemical composition according to any one of claims 1 to 4, comprising a component having a disease control action as said agrochemical active component.

6. The granular agrochemical composition according to any one of claims 1 to 5, comprising a component having an insect pest control action as said agrochemical active component.

7. The granular agrochemical composition according to any one of claims 1 to 6, comprising a component having a weed control action as said agrochemical active component.

8. The granular agrochemical composition according to any one of claims 1 to 7, comprising a component having a growth-regulating action as said agrochemical active component.

9. A method for spraying a granular agrochemical composition, said method comprising:
a mixing step of mixing the granular agrochemical composition according to any one of claims 1 to 8 with rice seeds; and
a spraying step of spraying the mixture obtained in said mixing step.

10. The method for spraying a granular agrochemical composition according to claim 9, wherein said rice is paddy rice, and wherein rice seeds of said paddy rice are sown by spraying of said mixture in said spraying step.

11. The method for spraying a granular agrochemical composition according to claim 9 or 10, wherein rice seeds of said paddy rice are directly sown by spraying of said mixture in said spraying step.

12. The method for spraying a granular agrochemical composition according to any one of claims 9 to 11, wherein said mixture is sprayed by a power granule sprayer in said spraying step.

13. The method for spraying a granular agrochemical composition according to any one of claims 9 to 11, wherein said mixture is sprayed by a riding paddy field management machine in said spraying step.

14. The method for spraying a granular agrochemical composition according to any one of claims 9 to 11, wherein said mixture is sprayed by an aircraft, manned helicopter, or unmanned helicopter in said spraying step.

15. The method for spraying a granular agrochemical composition according to any one of claims 9 to 14, wherein the mixing amount of said granular agrochemical composition in said mixture is 0.001 to 10 parts by mass per 1 part by mass of the rice seeds.

16. A method for controlling a disease(s) of rice, said method comprising mixing the granular agrochemical composition according to claim 5 with rice seeds, and spraying the mixture upon sowing.

17. A method for controlling an insect pest(s) of rice, said method comprising mixing the granular agrochemical composition according to claim 6 with rice seeds, and spraying the mixture upon sowing.

18. A method for controlling weeds in a rice field, said method comprising mixing the granular agrochemical composition according to claim 7 with rice seeds, and spraying the mixture upon sowing.

19. A method for regulating growth of rice, said method comprising mixing the granular agrochemical composition according to claim 8 with rice seeds upon sowing of the rice, and spraying the mixture upon the sowing.
